# EUROPÄISCHE PATENTSCHRIFT

(11) **EP 3 425 214 B1**
(45) Veröffentlichungstag und Bekanntmachung des Hinweises auf die Patenterteilung: **25.12.2019**
(21) Anmeldenummer: 18180865.0
(22) Anmeldetag: 29.06.2018
(51) Int. Cl.: F15B 13/02, F15B 11/032, F15B 11/072, G05D 16/06, F16K 11/00

(54) **HYDROPNEUMATISCHE VORRICHTUNG ZUR DRUCKÜBERSETZUNG**
HYDROPNEUMATIC BOOSTER DEVICE
DISPOSITIF HYDROPNEUMATIQUE DESTINÉ À LA MULTIPLICATION DE PRESSION

(30) Priorität: 05.07.2017 DE 102017115054
(43) Veröffentlichungstag der Anmeldung: 09.01.2019
(73) Patentinhaber: Tox Pressotechnik GmbH & Co. KG, 88250 Weingarten (DE)
(72) Erfinder: Dietzel, Eberhard, 88250 Weingarten (DE); Schad, Bernd, 88371 Ebersbach (DE)
(74) Vertreter: Otten, Roth, Dobler & Partner mbB Patentanwälte

(56) Entgegenhaltungen:
- EP-A2- 1 118 921
- DE-A1-102007 036 844
- GB-A- 322 155
- US-A- 2 985 490

## Beschreibung

### Stand der Technik

Hydropneumatische Vorrichtungen zur Druckübersetzung zum Beispiel für die Herstellung einer Niet- oder einer Clinch- bzw. einer Durchsetzfügeverbindung sind bekannt.

### Aufgabe und Vorteile der Erfindung

Aufgabe der vorliegenden Erfindung ist es, hydropneumatische Vorrichtungen zur Druckübersetzung zu verbessern, insbesondere bei kurzen Taktzeiten der hydropneumatischen Vorrichtung.

Diese Aufgabe wird durch den unabhängigen Anspruch gelöst.

In den abhängigen Ansprüchen sind zweckmäßige und vorteilhafte Varianten der Erfindung aufgezeigt.

Die Erfindung geht aus von einer hydropneumatischen Vorrichtung zur Druckübersetzung mit einem verschieblichen Arbeitskolben und einem verschieblichen Übersetzerkolben zur Druckübersetzung auf den Arbeitskolben, wobei ein Arbeitshub des Arbeitskolbens in eine Arbeitsrichtung einen ersten Hub und einen anschließenden zweiten Hub umfasst, wobei eine Pneumatikeinheit der Vorrichtung vorgesehen ist, so dass der erste Hub über eine pneumatische Beaufschlagung des Arbeitskolbens und der zweite Hub über eine pneumatische Beaufschlagung des Übersetzerkolbens kontrollierbar ist, und wobei Hydraulikflüssigkeit vom Übersetzerkolben verdrängt wird und die verdrängte Hydraulikflüssigkeit den zweiten Hub des Arbeitskolbens bewirkt, wobei ein Abschnitt des Übersetzerkolbens in einem Pneumatikraum der Vorrichtung in eine Vorwärtsrichtung und in eine Rückstellrichtung verschieblich ist und ein Abschnitt des Übersetzerkolbens den Pneumatikraum in einen ersten Hubraum und einen zweiten Hubraum unterteilt, wobei zur Rückstellung des Übersetzerkolbens ein mit dem zweiten Hubraum verbundenes pneumatisches Ventil der Pneumatikeinheit vorgesehen ist, wobei das pneumatische Ventil einen mit einem ersten Ventilkörper selbsttätig verschließbaren Überströmquerschnitt zwischen einer Eingangsseite des pneumatischen Ventils und einer Ausgangsseite des pneumatischen Ventils derart aufweist, dass der erste Ventilkörper den Überströmquerschnitt öffnet, wenn auf der Ausgangsseite der Gasdruck unter einen vorgebbaren Ausgangsdruck fällt, so dass über den Überströmquerschnitt ein Überströmen eines auf der Eingangsseite anstehenden Gasvolumens zur Ausgangsseite erfolgt und bei Erreichen des Ausgangsdrucks auf der Ausgangsseite der erste Ventilkörper den Überströmquerschnitt wieder verschließt, und wobei das pneumatische Ventil einen mit einem zweiten Ventilkörper selbsttätig verschließbaren Entlüftungsquerschnitt zwischen der Ausgangsseite des pneumatischen Ventils und einer Entlüftungsseite derart aufweist, dass der zweite Ventilkörper den Entlüftungsquerschnitt öffnet, wenn auf der Ausgangsseite der Gasdruck über den vorgebbaren Ausgangsdruck steigt, so dass über den geöffneten Entlüftungsquerschnitt ein Abströmen beziehungsweise ein Entlüften eines Gasvolumens von der Ausgangsseite zur Entlüftungsseite erfolgt und bei Erreichen des Ausgangsdrucks auf der Ausgangsseite der zweite Ventilkörper den Entlüftungsquerschnitt wieder verschließt. Die Entlüftungsseite ist vorzugsweise zur Atmosphäre hin offen.

Eine solche hydropneumatische Vorrichtung weist einen verschieblichen Arbeitskolben und einen verschieblichen Übersetzerkolben zur Druckübersetzung auf den Arbeitskolben auf, wobei ein Arbeitshub des Arbeitskolbens in eine Arbeitsrichtung einen ersten Hub und einen anschließenden zweiten Hub umfasst. Außerdem ist eine Pneumatikeinheit vorgesehen, so dass der erste Hub über eine pneumatische Beaufschlagung des Arbeitskolbens und der zweite Hub über eine pneumatische Beaufschlagung des Übersetzerkolbens kontrollierbar ist. Im zweiten Hub bzw. dem Krafthub des Arbeitskolbens, wird Hydraulikflüssigkeit vom Übersetzerkolben verdrängt und die verdrängte Hydraulikflüssigkeit bewirkt den Krafthub des Arbeitskolbens. Hierzu taucht ein vorderer Abschnitt des Übersetzerkolbens mit einer vergleichsweise kleineren Kolbenfläche in einen Hydraulikraum der Vorrichtung ein. Der Übersetzerkolben ist hin- und her verschieblich, wobei ein hinterer Abschnitt des Übersetzerkolbens mit einer vergleichsweise größeren Kolbenfläche den Pneumatikraum in einen ersten Hubraum und einen zweiten Hubraum unterteilt.

Der Übersetzerkolben dient demgemäß zur Druckübersetzung auf den Arbeitskolben, wobei im Krafthub nach dem Verdrängungsprinzip Hydraulikflüssigkeit verdrängt wird, wobei der Arbeitskolben im Krafthub mit einer Kraftübersetzung entsprechend der wirksamen Kolbenflächen des Übersetzerkolbens von der verdrängten Hydraulikflüssigkeit in eine Arbeitsrichtung bewegt wird.

Außerdem ist ein Speicherkolben vorgesehen, der vor dem Krafthub eine schnelle Bewegung des Arbeitskolbens bei dessen erstem Hub bzw. bei einem Eilhub das Nachfließen von Hydraulikflüssigkeit unterstützt.

Des Weiteren wirkt bei der betreffenden Vorrichtung in der Regel auf eine Seite des Übersetzerkolbens und auf eine Seite des Speicherkolbens ein pneumatischer Druck bzw. Regeldruck, der z. b. im Bereich von 0,8 bar über Atmosphärendruck liegt, der eine pneumatische Rückstellung des Übersetzerkolbens bewirkt, was als "Luftfeder" bezeichnet werden kann. Die Rückstellung erfolgt, wenn auf die andere Seite des Übersetzerkolbens kein zum Regeldruck höherer Betriebsdruck von z. B. 4 bis 6 bar mehr wirkt, was nach Ende des zweiten Hubs des Arbeitskolbens stattfindet.

Der Speicherkolben wird in der Regel ständig einseitig mit dem Regeldruck beaufschlagt, der als pneumatischen Vordruck wirkt, so dass das an der anderen Seite des Speicherkolbens anstehende Hydraulikflüssigkeitsvolumen in einem Hydraulik-Speicherraum unter dem entsprechenden Druck bzw. einer Vorspannung steht.

Der Luftfeder- bzw. Regeldruck ist demgemäß permanent jeweils einseitig auf den Übersetzerkolben und den Speicherkolben wirksam. Im Normalfall ist der Regeldruck unabhängig vom Bewegungszustand der beaufschlagten Kolben immer konstant. Die Drucksituationen in den verschiedenen Pneumatikräumen können aber je nach Art der Betriebsführung angepasst bzw. geregelt sein. Zum Beispiel kann ein auf den Speicherkolben wirksamer Druck für eine Eilhubunterstützung höher vorgegeben werden.

Die Zeitspannen für die Vorwärtsbewegung und die Rückstellung der Kolben bestimmen die Gesamtzykluszeit der hydropneumatischen Vorrichtung. Bei modernen Anwendungen sind kurze Zykluszeiten gefordert, bei gleichzeitig hoher Prozesssicherheit. Dies ist bislang nur bedingt zufriedenstellend lösbar.

Der Kern der Erfindung liegt darin, dass das pneumatische Ventil derart ausgebildet ist, dass die Fläche des Entlüftungsquerschnitts mindestens 30 Prozent der Fläche des Überströmquerschnitts beträgt, vorzugsweise mindestens 50 Prozent der Fläche des Überströmquerschnitts beträgt.

Damit lässt sich die erfindungsgemäße hydropneumatische Vorrichtung technisch und wirtschaftlich vorteilhaft bereitstellen. Insbesondere sind kurze Taktzeiten bzw. geringe Gesamtzykluszeiten erreichbar, was vorteilhaft mit einer hohen Schnellentlüftungsrate realisiert ist. Damit kann auf teure und konstruktiv nachteilige Ventile, die bislang zusätzlich z. B. eingebaut werden müssen, verzichtet werden. Diese Ventile neigen darüber hinaus zu einem hohen Verschleiß und weisen ein sehr wechselhaftes Ansprechverhalten auf.

Außerdem treten bislang bei Entlüftungsvorgängen zur schnellen Entlüftung der Pneumatikräume der hydropneumatischen Vorrichtung unerwünschte bzw. unangenehme Strömungs- bzw. Begleitgeräusche auf.

Mit dem Einsatz eines erfindungsgemäß ausgebildeten pneumatischen Ventils, das vorzugsweise in einer ohnehin vorhandenen Ventileinrichtung der Pneumatikeinheit integriert ist, wird eine überdurchschnittlich große Sekundärentlüftung und damit eine überdurchschnittlich hohe Entlüftungsrate der hydropneumatischen Vorrichtung erzielt. Im Ergebnis führt dies zu vergleichsweise sehr kurzen Taktzeiten des Übersetzerkolbens, ohne zusätzliche Ventile.

Bislang wird beispielsweise ein Druckregelventil eingesetzt, das ausgangsseitig dauerhaft den Regeldruck auf einer Vorhubseite des Übersetzerkolbens bereitstellt. Ausgangsseitig ist das Druckregelventil zudem mit einer Rückhubseite eines Speicher- bzw. Verdrängerkolbens verbunden. Vorzugsweise wird dieses Ventil durch das vorgeschlagene pneumatische Ventil mit integrierter Schnell- bzw. Sekundärentlüftung ersetzt, was unkompliziert bzw. mit einem Montageschritt auch bei einer Umrüstung möglich ist.

Mithilfe des Druckregelventils wird der variable vergleichsweise hohe pneumatische Eingangsdruck über einen sich druckabhängig öffnenden und schließenden Membranventilschieber wie z. B. ein an einer Membran aufgenommenes Stößelelement auf einen reduzierten bzw. auf einen zum Eingangsdruck vergleichsweise niedrigeren Ausgangsdruck konstant und weitgehend unabhängig vom Gas-Volumenstrom, welcher das Druckregelventil passiert, verringert werden. Das Druckregelventil kann innerhalb eines vom Druckventil abhängigen Druck-Regelbereichs exakt auf einen gewünschten Ausgangsdruck eingestellt werden. Dies kann eine beispielsweise über ein Handrad mit einstellbarer Drehspindel erfolgen. Mit der Spindel kann eine Vorspannkraft einer ) mechanischen Kraftmittels des Druckregelventils wie zum Beispiel einer Druckfeder verändert bzw. eingestellt werden. Die Vorspannkraft wirkt vorzugsweise auf eine flexible bzw. elastische Membran des Druckregelventils.

Steigt der pneumatische Druck auf der Ausgangsseite zum Beispiel aufgrund eines entgegen der Arbeitsrichtung sich bewegenden Speicherkolbens an, wird der erhöhte Ausgangsdruck, der dann über den eingestellten Ausgangsdruck hinausgehen würde, über die im Druckregelventil integrierte Schnell- bzw. Sekundärentlüftung so lange reduziert, indem Gas von der Ausgangsseite in die Umgebung abströmt, bis der Ausgangsdruck wieder auf das vorgegeben eingestellte Druckniveau abgesunken ist. Diese Regelung erfolgt vorzugsweise innerhalb sehr kurzer Öffnungszeiten bzw. Entlüftungszeiten.

Vorteilhaft ist die Sekundärentlüftung integraler Bestandteil des ohnehin notwendigen Druckregelventils und muss nicht zusätzlich zu dem Druckregelventil in der betreffenden Pneumatikleitung eingebaut werden. Bei der integrierten Schnell- bzw. Sekundärentlüftung wird eine Verbindung von eines mit der Ausgangsseite des Druckregelventils verbundenen Leitungsbereichs im Druckregelventil mit der Umgebung bzw. der Außenatmosphäre geöffnet und nach der Entlüftung wieder verschlossen, was selbsttätig automatisiert und mit präzisem Schaltverhalten erfolgt. Von Vorteil ist auch, dass eine überdurchschnittlich große Entlüftungsrate und damit eine deutlich schnellere Taktung bzw. kürzere Taktzeiten der hydropneumatischen Vorrichtung erreicht werden, ohne dass zusätzliche Schnellentlüftungseinrichtungen bzw. -ventile notwendig sind.

Dieser Vorteil wirkt dann, wenn das Gas bzw. die in einen Pneumatikraum zugeführte Druckluft zur pneumatischen Bewegung eines Kolbens in eine erste Richtung bei Umkehr der Bewegungsrichtung des entsprechenden Kolbens in die entgegengesetzte Bewegungsrichtung wieder aus dem Pneumatikraum entweichen muss. Je schneller das Entweichen bzw. die Entlüftung dieses Pneumatikraums erfolgt, desto kürzer ist die Taktzeit der hydropneumatischen Vorrichtung.

Die benötigte Zeit zur Überwindung des Rückhubes des Kolbens, wie z. B. eines Übersetzerkolbens oder eines Speicherkolbens, ist umso kürzer je größer der entlüftete Volumenstrom bzw. die abgeführte Gasmenge pro Zeiteinheit ist.

Die Geschwindigkeit des Belüftungs- wie auch des Entlüftungsvorgangs ist entscheidend für die Taktzeit bzw. eine Gesamtzykluszeit der hydropneumatischen Vorrichtung, in welcher der Arbeitskolben vor- bzw. zurückgefahren werden kann.

Die betreffenden Pneumatikräume der hydropneumatischen Vorrichtung werden in der Regel über ein gemeinsames Hauptregelventil bzw. das Druckregelventil entlüftet. Für die oben erläuterten kurzen Taktzeiten muss das Druckregelventil ausreichend groß sein, abhängig von der Größe der Pneumatikräume der hydropneumatischen Vorrichtung. Das Druckregelventil muss also insbesondere ausreichend groß dimensionierte Volumina im Inneren und entsprechend groß dimensionierte Anschlussquerschnitte aufweisen, damit Leitungen mit ausreichend großen Leitungsquerschnitt an das Druckregelventil anschließbar sind.

Mit der vorgeschlagenen hydropneumatischen Vorrichtung werden die Nachteile vermeidbar, die bei bisher eingesetzten Druckregelventilen ohne integrierte Sekundärentlüftung aber dafür mit zusätzlich notwendigen Sekundärentlüftungsventilen hingenommen werden müssen.

Denn diese Anordnungen sind nachteilig, weil mit merklich höherem Verschleiß behaftet und weil diese ein sehr wechselhaftes Ansprechverhalten aufweisen. Im Ergebnis führt dies dazu, dass zum Auslösen bzw. Öffnen der

Sekundärentlüftung ein beispielsweise um 0,1 bis 1,0 bar höherer Druck erforderlich ist, als zum Schließen der Sekundärentlüftung. Die dabei auftretende Hysterese des Entlüftungsventils, das zum Beispiel auf der Rückseite des Übersetzerkolben eingesetzt ist, führt aufgrund des Übersetzungsverhältnisses zu unerwünschten Einflüssen auf die Presskraft des Arbeitskolben der hydropneumatischen Vorrichtung.

Außerdem neigen bislang vorhandene Einrichtungen mit herkömmlicher Sekundärentlüftung bei bestimmten Entlüftungsvorgängen bzw. -geschwindigkeiten zu unerwünschten bzw. nachteiligen Geräuschen. Diese werden bei der erfindungsgemäßen hydropneumatischen Vorrichtung vermieden.

Erfindungsgemäß beträgt die Fläche des Entlüftungsquerschnitts mindestens 30 Prozent der Fläche des Überströmquerschnitts, vorzugsweise beträgt die Fläche des Entlüftungsquerschnitts mindestens 50 Prozent der Fläche des Überströmquerschnitts.

Vorteilhaft liegt der Ansprechdruck des vorgeschlagenen pneumatischen Ventils, also der Druck, bei dem eine schnelle Entlüftung und daher ein Druckanstieg vermieden bzw. schnell abgebaut wird, nicht oder nur geringfügig über dem voreingestellten Regel- bzw. Ausgangsdruck des Ventils. Der Ausgangsdruck des pneumatischen Ventils ist der einstellbare Arbeitsdruck des pneumatischen Ventils, also der Druck, der am Ventil vorgebbar ist und welcher nicht überschritten werden soll bei der Vorwärtsbewegung des Übersetzerkolbens in dem Pneumatikraum. Denn für ein schnelles Vorfahren des Übersetzerkolbens ist es Voraussetzung, dass das Gas aus dem dabei kleiner werdenden Pneumatikraum schnell ohne praxisrelevanten Druckanstieg entweichen kann.

Bei der Bewegung des Übersetzerkolbens in die Vorwärtsrichtung steigt der Druck im zweiten Hubraum mit dem vorgeschlagenen pneumatischen Ventil nicht bzw. nur geringfügig an. Das pneumatische Ventil ist vorzugsweise als eine Baueinheit bzw. als Druckregelventil mit integraler Schnellentlüftung bzw. als Druckregel-Schnellentlüftungsventil ausgebildet.

Bei bisherigem Ventil ist der Entlüftungsquerschnitts relativ klein bzw. beträgt maximal unter zum Beispiel 30 Prozent des Überströmquerschnitts, also dem Querschnitt im Ventil, über den Gas von der Druckversorgung des Ventils zum Pneumatikraum überströmt, wenn der Druck zur Rückstellung des Übersetzerkolbens nachgeliefert wird, was für kurze Taktzeiten ebenfalls maximal schnell erfolgen soll.

Das vorgeschlagene pneumatische Ventil umfasst vorzugsweise Einstellmittel zur variablen aber festen Vorgabe des Ausgangsdrucks. Die Einstellmittel umfassen z. B. ein Handrad mit Spindel, die auf eine Feder wirkt und damit die Feder eine Vorspannung vorgibt auf eine druckabhängig ausweichbare Ventilmembrane mit einem Ventilkörper. Ein betreffender z. B. erster Ventilkörper ist damit vorgespannt in Richtung einer Verschlussstellung des ersten Ventilkörpers. Abhängig von der axialen Stellung der Spindel wird die Feder vorgespannt bzw. komprimiert. Zu Bewegung des Ventilkörpers wirkt der ausgangsseitige Druck auf die Membran gegen die Federkraft und bewegt die Membran mit dem Ventilkörper, so dass der Druck ausgangsseitig schnell abbaubar ist.

Es ist überdies vorteilhaft, wenn das pneumatische Ventil derart ausgebildet ist, dass die Fläche des Entlüftungsquerschnitts zumindest nahezu der Fläche des Überströmquerschnitts entspricht. Damit wird ausgangsseitig des Ventils sowohl die Druckversorgung von der eingangsseitigen Druckquelle in die eine Strömungsrichtung bei Absinken unter den Regeldruck als auch die Entlüftung in die Umgebung bei ausgangsseitigem Überschreiten des Regeldrucks zur Schnellentlüftung in die andere Strömungsrichtung mit dem gleichen vergleichsweise großen und damit vorteilhaften Strömungsquerschnitt realisiert. Verzögerungen bzw. praxisrelevante Druckschwankungen werden vorteilhaft vermieden, da immer ein ausreichend großer Überströmquerschnitt frei ist.

Vorzugsweise ist die Fläche des Entlüftungsquerschnitts größer als circa 50 mm², vorzugsweise größer als circa 80 mm² bis Vorzugsweise größer als circa 160 mm². Dabei ist die Gewinde-Anschlussgröße am Ventil im Zoll-Maßbereich bzw. beträgt vorzugsweise 1/2-Zoll bzw. 0,5-Zoll oder Dreiviertel-Zoll.

Auch von Vorteil ist es, wenn der Überströmquerschnitt und der Entlüftungsquerschnitt konzentrisch angeordnet sind. Damit ist das Ventil kompakt bzw. platzsparend bauend und mit wenigen und einfach bereitstellbaren Bauteilen herstellbar. Außerdem zeichnet sich das Ventil durch geringe Strömungsgeräusche und geringe Strömungsverluste aus.

Vorteilhaft ist der Überströmquerschnitt als Ringfläche ausgebildet. Dies ist platzsparend und konstruktiv vorteilhaft. Radial innen ist die Ringfläche vorzugsweise von einem zylindrischen insbesondere bewegbaren Ventilelement begrenzt. Radial außen wird die Ringfläche vorzugsweise von einer Bohrung des pneumatischen Ventils begrenzt.

Eine vorteilhafte Modifikation zeichnet sich dadurch aus, dass der Entlüftungsquerschnitt als Ringfläche ausgebildet ist. Radial innen ist die Ringfläche vorzugsweise von einem zylindrischen insbesondere bewegbaren Ventilelement begrenzt, vorzugsweise mit einem zum Überströmquerschnitt gemeinsamen Ventilelement. Radial außen wird die Ringfläche vorzugsweise von einer Bohrung des pneumatischen Ventils begrenzt.

Besonders vorteilhaft ist der Überströmquerschnitt zur Druckversorgung als auch der Entlüftungsquerschnitt zur Atmosphäre bzw. zur Umgebung als Ringspalt-Querschnitt gestaltet, die vorzugsweise zueinander identisch bzw. zusätzlich konzentrisch sind.

Auch von Vorteil ist es, wenn ein bewegbares Steuerelement des Ventils, insbesondere ein Steuerschieber wie ein längliches vorzugsweise zylindrisches Stößelelement, durch den zweiten Ventilkörper greift und auf den ersten Ventilkörper wirkt. Dies ermöglicht eine sichere Ventil-Wirkung bei einfacher und kompakter Bauweise. Das Stößelelement kann schlank und länglich ausgebildet werden und wirkt vorzugsweise als Steuerschieber.

Ein weiterer Vorteil ist darin zu sehen, dass das pneumatische Ventil eine Membrananordnung mit einer federnd ausweichbaren Membran umfasst, mit welcher eine Bewegung des ersten Ventilkörpers beeinflussbar ist. Eine Membrananordnung spricht aufgrund der Flexibilität der Membran feinfühlig und exakt auf an der Membran wirkende Druck- bzw. Kraftveränderungen an. Dabei ist es vorteilhaft, dass beidseitig der Membran Drücke wirken, die pneumatischen Ursprungs sein können und/oder durch mechanische Bauteile wie zum Beispiel eine Druckfeder bereitstellbar sind. Außerdem ist eine Membrananordnung mechanisch und chemisch robust und trennt benachbarte Räume gasdicht voneinander auf engstem Raum. Zudem ist eine Membran einfach austauschbar und in der Form flexibel.

Nach einer weiteren vorteilhaften Variante der Erfindung umfasst das pneumatische Ventil eine Membrananordnung mit einer federnd ausweichbaren Membran, mit welcher eine Bewegung des zweiten Ventilkörpers beeinflussbar ist. Vorzugsweise umfasst das pneumatische Ventil genau zwei Membrane, die miteinander zusammenwirken. Damit kann das gewünschte Regelverhalten besonders vorteilhaft bereitgestellt werden.

Ein anderer Vorteil liegt darin, dass das pneumatische Ventil eine Membrananordnung mit einem an der Membran angebrachten Steuerelement, insbesondere Steuerschieber, aufweist. Das Steuerelement wie z. B. ein Stößelelement ist damit exakt vorgebbar bewegbar, abhängig von wirkenden pneumatischen und/oder mechanischen Druckkräften an der Membran.

Von Vorteil ist es auch, wenn die Pneumatikeinheit eine Schalldämpfereinheit aufweist. Damit lassen sich insbesondere mögliche unerwünschte Strömungsgeräusche bei einem Schnellentlüftungsvorgang vermeiden oder zumindest minimieren.

Die Erfindung erstreckt sich auch auf eine Vorrichtung zum Clinchen oder zum Nieten mit einem antreibbaren Arbeitskolben zum Erstellen einer Clinchanordnung oder einer Nietanordnung mit einem Nietelement, wobei die Vorrichtung eine hydropneumatische Vorrichtung nach einer der oben genannten Ausgestaltungen umfasst bzw. als solche ausgebildet ist.

Schließlich wird eine Vorrichtung zum Pressen, Einpressen, Prägen, Verdichten, Einstanzen, Verstemmen, Durchsetzfügen, Stanzen, Umformen und/oder Lochen mit einem antreibbaren Arbeitskolben beansprucht, wobei die Vorrichtung eine hydropneumatische Vorrichtung wie oben beschrieben aufweist bzw. als solche ausgebildet ist.

### Figurenbeschreibung

Weitere Merkmale und Vorteile der Erfindung sind anhand von in den Figuren schematisch gezeigten Ausführungsformen der Erfindung erläutert. Im Einzelnen zeigt:
- Figur 1: eine erfindungsgemäße hydropneumatische Vorrichtung zur Druckübersetzung stark schematisiert dargestellt,
- Figur 2: den bei der Vorrichtung gemäß Fig. 1 vorhandenen stark schematisiert im Schnitt dargestellten Präzisions-Druckregler in einem Ausgangszustand und
- Figur 3: einen zum Präzisions-Druckregler gemäß Fig. 2 alternativen Präzisions-Druckregler in einem Ausgangszustand, ebenfalls stark schematisiert im Schnitt dargestellt.

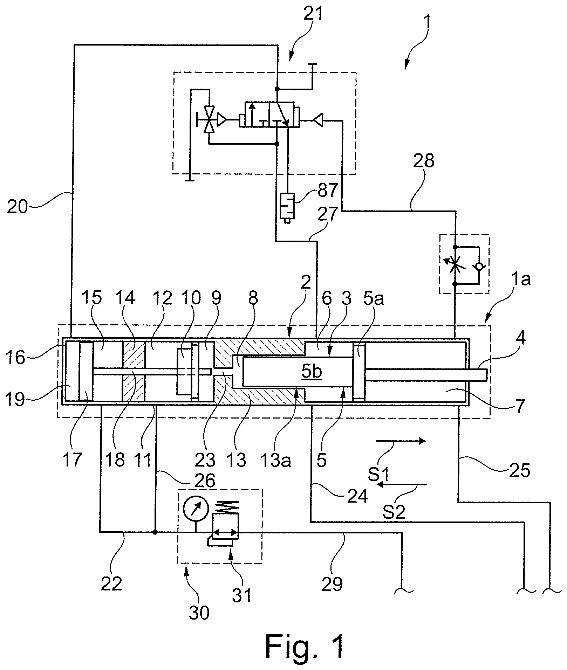

Figur 1 zeigt geschnitten eine stark schematische erfindungsgemäße hydropneumatische bzw. pneumohydraulische Vorrichtung zur Druckübersetzung, nachfolgend auch als Druckübersetzer 1 bezeichnet, mit einer gestrichelt umrandeten Kolben-Zylinder-Einheit 1a und Elementen einer PneumatikEinheit in Fließbild-Darstellung.

Der Druckübersetzer 1 weist ein Gehäuse 2 mit einem Deckel 16 auf, in welchem ein Arbeitskolben 3 verschieblich und radial dichtend angeordnet ist. Der Arbeitskolben 3, der sich in Figur 1 in einer Grundstellung befindet, umfasst einen vorderen Abschnitt mit einer nach außen durch das Gehäuse 2 ragenden Kolbenstange 4 und einen weiteren Abschnitt mit einem Teilkolben 5 an der Kolbenstange 4 ausgebildet, welcher ebenfalls radial abgedichtet im Gehäuse 2 gemeinsam mit der Kolbenstange 4 bewegbar ist. Der Teilkolben 5 weist einen durchmessergrößeren scheibenförmigen Kolbenabschnitt 5a und einen dazu durchmesser-geringeren und daran anschließenden rückwärtigen stangenförmigen Kolbenabschnitt 5b auf.

Durch den Teilkolben 5 bzw. den scheibenförmigen Kolbenabschnitt 5a werden zwei Pneumatikräume 6 und 7 voneinander getrennt. Bei einem entsprechenden höheren Druck im rückwärtigen Pneumatikraum 6 wird der Arbeitskolben 3 nach unten in Richtung gemäß Pfeil S1 bzw. in Arbeitsrichtung geschoben.

Der Kolbenabschnitt 5b grenzt radial abgedichtet an einen mit einer Hydraulikflüssigkeit gefüllten hydraulischen Arbeitsraum 8, der mit einem hydraulischen Speicherraum 9 über eine Engstelle mit einer Verbindungsbohrung 23 hydraulisch verbunden ist. Der mit Hydraulikflüssigkeit gefüllte Speicherraum 9 wird durch einen verschieblich bewegbaren Speicherkolben 10 beaufschlagt. Der Speicherkolben 10 ist in einem Mantelrohr 11 radial abgedichtet und axial verschiebbar, wobei das Mantelrohr 11 einen oberhalb des Speicherkolbens 10 liegenden Steuerraum 12 umfänglich umschließt. Der Steuerraum 12 ist pneumatisch mit einem Regeldruck beaufschlagbar. Zwischen dem Steuerraum 12 und dem Speicherraum 9 ist eine Gas-Flüssigkeit-Trennung mit einer entsprechenden Dichtung umfänglich am Speicherkolben 10 realisiert.

Das Mantelrohr 11 wird im Bereich des Speicherraums 9 von einem Gehäuseteil 13 des Gehäuses 2 und im Bereich des Steuerraums 12 von einer Trennwand 14 begrenzt.

In dem innenseitigen Ringspalt-Bereich 13a des Gehäuseteils 13, in welchem der Kolbenabschnitt 5b verschieblich ist bzw. darin eintaucht, ist eine weitere dichte Gas-FlüssigkeitsTrennung zwischen dem Pneumatikraum 6 und dem hydraulischen Arbeitsraum 8 vorhanden.

Zwischen dem Steuerraum 12 und einem weiteren Pneumatikraum 15 ist die ortsfeste Trennwand 14 positioniert, durch welche ein bewegbarer Tauchkolben 18 eines Antriebskolbens bzw. eines Übersetzerkolbens 17 radial abgedichtet durchführt. Der Tauchkolben 18 ist fest am Übersetzerkolben 17 zentrisch angeordnet und erstreckt sich von diesem einseitig nach unten, wobei der Tauchkolben 18 einen deutlich geringeren Außendurchmesser als der Übersetzerkolben 17 aufweist.

Der Tauchkolben 18 greift durch entsprechende Öffnungen in der Trennwand 14 und in dem Speicherkolben 10 und ragt bei dem dargestellten Ausführungsbeispiel in der Grundstellung gemäß Figur 1 mit seinem freien Ende in den Speicherraum 9. Alternativ kann der Tauchkolben z. B. in eine Bohrung eines im Speicherkolben aufgenommenen weiteren Elements hineinragen. Der Übersetzerkolben 17 bzw. damit der Tauchkolben 18 sind pneumatisch über eine Vorhub-Leitung 20 mit einer Ventileinheit 21 mit einer Schalldämpfereinheit 87 verbunden und durch Druckbeaufschlagung eines an den Übersetzerkolben 17 angrenzenden Antriebsraumes 19 angetrieben bewegbar. Die Ventileinheit 21 steht außerdem über eine Leitung 27 mit dem Pneumatikraum 6 und über eine Leitung 28 mit dem Pneumatikraum 7 in Verbindung.

Eine Versorgungsleitung 29 zu einer Druckregeleinheit 30 mit einem Druckregelventil 31, eine Vorhub-Leitung 24 und eine Rückhub-Leitung 25 sind zudem mit einer nicht dargestellten pneumatischen Druckversorgung verbunden.

Der Übersetzerkolben 17 grenzt auf der dem Antriebsraum 19 gegenüberliegenden Raum an den Übersetzerkolben-Rückhubraum bzw. Pneumatikraum 15 an. Der Pneumatikraum 15 ist über eine Rückhub-Leitung 22 und dem Druckregelventil 31 mit pneumatischem geregeltem Regeldruck beaufschlagbar.

Bei einem zweiten Hub des Arbeitskolbens 3 bzw. einem Hochdruckarbeitsgang wird der Antriebsraum 19 so druckbeaufschlagt, dass der Tauchkolben 18 unter einer Hubbewegung in Richtung S1 in die Verbindungsbohrung 23 eintaucht. Dabei wird mit Hilfe einer Radialdichtung in der Verbindungsbohrung 23 die Verbindung zwischen dem Speicherraum 9 und dem Arbeitsraum 8 unterbrochen. Bei der weiteren Hubbewegung des Tauchkolbens 18 in Richtung S1 taucht der Tauchkolben 18 weiter in den Arbeitsraum 8 ein, womit aufgrund des relativ kleinen Tauchkolbendurchmessers ein vergleichsweise hoher Arbeitsdruck im Arbeitsraum 8 erzeugt wird. Dieser Druck ergibt sich aus dem Übersetzungsverhältnis der jeweiligen wirkenden Kolbenflächen des Übersetzerkolbens 17 zum Tauchkolben 18, ausgehend von dem auf den Übersetzerkolben 17 wirkenden pneumatischen Druck. Auf diese Weise kann mit dem Arbeitskolben 3 eine hohe Kraft an der Kolbenstange 4 erzeugt werden. Bei dem erfindungsgemäßen Druckübersetzer 1 übernimmt der pneumatisch angetriebene Übersetzerkolben 17 wie dargelegt die Krafterzeugung während des Krafthubes.

Bei dem Rückhub des Tauchkolbens 18 in Richtung S2, nach dem Ende des Arbeitshubes des Arbeitskolbens 3, wird Luft aus dem Antriebsraum 19 abgeführt. Dadurch kann der Übersetzerkolben 17 mit dem Tauchkolben 18 in die gemäß Figur 1 dargestellte Grundstellung zurück gebracht werden. Dabei wird aus dem Arbeitsraum 8 Hydraulikflüssigkeit in dem Speicherraum 9 aufgrund der gleichzeitig in Richtung S2 stattfindenden Rückbewegung des Arbeitskolbens 3 verdrängt. Der Arbeitskolben 3 wird dabei angetrieben durch Erhöhung des pneumatischen Drucks im Pneumatikraum 7.

Für die Rückstellung des Übersetzerkolbens 17 ist die notwendige Kraft durch in den Übersetzerkolben-Rückhubraum bzw. Pneumatikraum 15 eingeleitete Luft bzw. durch einen entsprechenden pneumatischen Druck realisiert. Dazu ist der Druckübersetzer 1 mit einer sogenannten Luftfeder zur pneumatischen Druck-Beaufschlagung des Pneumatikraums 15 versehen. Da für die Rückstellung des Übersetzerkolbens 17 nicht der vergleichsweise hohe pneumatische Betriebsdruck von z. b. 4-6 bar erforderlich ist, wird der pneumatische Druck im Pneumatikraum 15 auf einen sogenannten Luftfederdruck reduziert.

Der gleiche pneumatische bzw. Luftfederdruck wie im Pneumatikraum 15 wirkt auch im Steuerraum 12 über die Leitung 26und damit auf den Speicherkolben 10, wodurch die im Speicherraum 9 untergebrachte Hydraulikflüssigkeit unter reduzierter Vorspannung gehalten wird. Alternativ kann der Speicherkolben 10 auch mit vollem Betriebsdruck beaufschlagt und damit unter erhöhter Vorspannung gehalten werden. Dies dient zur Eilhubunterstützung.

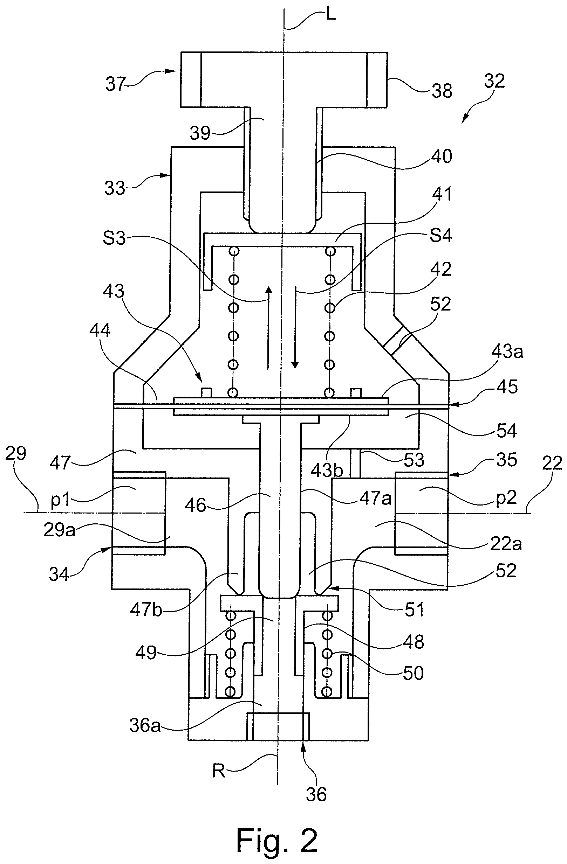

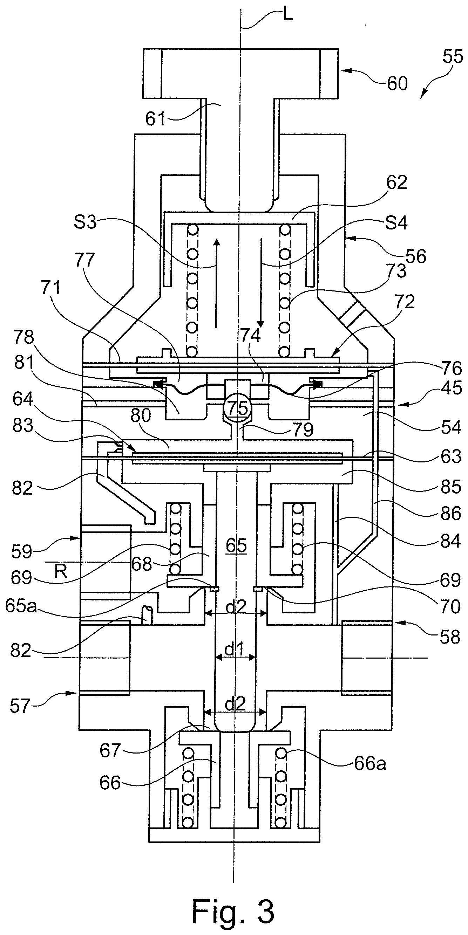

Das Druckregelventil 31 ist vorzugsweise als Präzisions-Druckregler 32 bzw. 55 gemäß Fig. 2 bzw. Fig. 3 ausgestaltet und weist eine integrierte Schnellentlüftungs-Funktion bzw. eine integrierte Sekundärentlüftungs-Funktion auf.

Der Druckregler 32 ist eingangsseitig über die Versorgungsleitung 29 pneumatisch bzw. mit Druckluft versorgt. In der Versorgungsleitung 29 herrscht ein konstantes oder variables zum Regeldruck vergleichsweise höheres Betriebsdruck-Niveau mit einem Eingangsdruck bzw. einem Betriebs-Druck p1 von zum Beispiel zwischen 4 und 16 bar.

Auf der Ausgangsseite des Druckreglers 32 also in der Rückhub-Leitung 22 und der Leitung 26 stellt der Druckregler 32 mit exaktem Regelverhalten einen zum Betriebsdruck niedrigeren konstanten Ausgangsdruck p2 im Bereich von zum Beispiel 0,8 bar über Umgebungsdruck bereit.

Figur 2 zeigt stark schematisiert bzw. teilweise unter Weglassung von Einzeldetails den Präzision-Druckregler 32 gemäß dem Druckregelventil 31 des Druckübersetzers 1 aus Fig. 1. Der Druckregler 32 ist in Fig. 2 in einem Ausgangszustand dargestellt, in welchem sämtliche Anschlüsse bzw. sämtliche möglichen internen Leitungs-Verbindungen gesperrt bzw. verschlossen sind. Der Präzision-Druckregler 32 umfasst ein Gehäuse 33, das an einer mit der Versorgungsleitung verbundenen Eingangsseite einen eingangsseitigen Schraubgewinde-Anschluss 34 und an einer gegenüberliegenden mit der Rückhub-Leitung 22 verbundenen Ausgangsseite einen ausgangsseitigen Schraubgewinde-Anschluss 35 aufweist, zum Beispiel jeweils in Ausführung als Halb- oder Dreiviertelzoll-Anschluss. Der Schraubgewinde-Anschluss 34 führt im Druckregler 32 zu einem Innenbohrungsabschnitt 29a, in dem der zum mit dem Präzision-Druckregler 32 ausgangsseitig vorgebbaren Regel- bzw. Ausgangsdruck vergleichsweise hohe Eingangsdruck p1 herrscht. Der Schraubgewinde-Anschluss 35 steht im Druckregler 32 in Verbindung zu einem Innenbohrungsabschnitt 22a, in dem der Ausgangsdruck p2 vorgebbar ist, wobei der Präzision-Druckregler 32 diesen selbsttätig einregelt, z. B. auf 0,8 bar über Umgebungsdruck.

Je nach Betriebszustand des Druckübersetzers 1 bzw. abhängig von der linearen Bewegung bzw. Stellung des Übersetzerkolbens 17 im Gehäuse 2 würde sich auf der Seite der Rückhub-Leitung 22 bzw. auf der mit der Rückhub-Leitung 22 verbundenen Leitung 26 ein veränderlicher Druck ergeben. Um eine solche unerwünschte bzw. praxisrelevante Abweichung des Ausgangsdrucks p2 zu vermeiden, wird der Druckregler 32 mit starker Sekundärentlüftungsfunktion eingebaut, welcher ausgangsseitig selbsttätig bzw. aktiv auf den Ausgangsdruck p2 regelt, was weiter unten dargelegt ist.

Außerdem ist am Druckregler 32 ein weiterer Anschluss 36 vorhanden, welcher zur Umgebung bzw. zur Atmosphäre R hin offen ist und dort der Atmosphären- bzw. Umgebungsdruck p0 von circa 1 bar herrscht. Der Anschluss 36 ist im Druckregler 32 mit einem Innenbohrungsabschnitt 36a verbunden.

Wie weiter unten erklärt, ist der Druckregler 32 so gestaltet, dass abhängig von den Drücken p1 bzw. p2 eine Verbindung des Innenbohrungsabschnitts 36a zum Innenbohrungsabschnitt 29a und zum Innenbohrungsabschnitt 22a entweder verschlossen ist, was den Ausgangszustand des Druckreglers 32 gemäß Fig. 2 zeigt, oder eine Verbindung zwischen den Innenbohrungsabschnitten 22a und 36a offen ist, was einen Schnell- bzw. Sekundärentlüftungszustand betrifft oder eine Verbindung zwischen den Innenbohrungsabschnitten 29a und 22a offen ist, bei geschlossener Verbindung zum Innenbohrungsabschnitt 36a, was einem praxisrelevanten Abfall des Drucks p2 unter den Regeldruck entgegenwirkt.

Der Druckregel 32 umfasst zur manuellen Einstellung und Vorgabe des Regeldrucks, der ausgangsseitig herrschen soll, also zur Vorgabe des Ausgangsdrucks p2, Einstellmittel 37 mit einem um eine Längsachse L des Druckreglers 32 drehbaren Handrad 38 mit daran fest verbunden vorhandener Spindel 39, welche mit einem Spindel-Außengewinde in einer entsprechenden Innengewindebohrung 40 des Gehäuses 33 gemäß Richtung S3 nach außen bzw. gemäß Richtung S4 nach innen abhängig von der Drehstellung des Handrads 38 versetzbar ist.

Die Spindel 39 drückt mit ihrer freien vorderen Stirnfläche auf eine nach unten deckelartig offene Stellhülse 41, welche innenseitig an einer Wand des Gehäuses 33 gleitgeführt in Richtung S3 und S4 linear hin- und her verschieblich aufgenommen ist. Zwischen der Stellhülse 41 und einer nach unten beabstandeten Membranplatte 43 ist eine als Schraubenfeder 42 ausgebildete Druckfeder vorgespannt konzentrisch zur Längsachse L vorhanden.

Die Membranplatte 43 umfasst eine obere Platte 43a und eine untere Platte 43b, die aneinander gedrückt sind und zwischen denen eine flexible gasdichte Stellmembran 44 eingeklemmt ist. Die Stellmembran 44 reicht radial zu L nach außen über die Membranplatte 43 hinaus und ist entlang ihres gesamten äußeren Randes an einem Trennabschnitt 45 des Gehäuses 33 fest eingeklemmt fixiert. Die Stellmembran 44 ist daher mit ihrem zentralen Bereich gemeinsam mit der Membranplatte 43 geringfügig nach oben gemäß S3 und unten gemäß S4 entlang der Längsachse L ausweichbar, was abhängig von den beidseitig auf die Membranplatte 43 mit der Stellmembran 44 wirkenden Kräften erfolgt. Von oben ist an der Membranplatte 43 die wirkende Druckkraft der Schraubenfeder 42 relevant, wobei diese in einem Raum des Gehäuses 33 aufgenommen ist, in welchem über eine Durchlassbohrung 52 in der Gehäusewand der Umgebungsdruck p0 herrscht. An der Membranplatte 43 mit der Stellmembran 44 wirkt gegenüber bzw. unterseitig der pneumatische Druck in einem daran angrenzenden Zwischenraum 54 innerhalb des Gehäuses 33 des Druckreglers 32. Außerdem wirken Kräfte über ein weiter unten erläutertes Stößelelement. Der Zwischenraum 54 ist über eine Verbindungsbohrung 53 mit dem Innenbohrungsabschnitt 22a verbunden.

An der Unterseite der Platte 43b bzw. gegenüber der Schraubenfeder 42 ist das mit der Membranplatte 43 fest verbundenes nach unten sich vorstehend erstreckendes und als Steuerschieber wirkendes Stößelelement 46 vorhanden. Das längliche schlanke Stößelelement 46 reicht durch den Zwischenraum 54 und weiter durch einen Zwischenboden 47, der den Zwischenraum 54 unterhalb begrenzt. Das Stößelelement 46 reicht verschieblich geführt aber gasdicht durch eine Bohrung 47a des Zwischenbodens 47 und steht unterhalb des Zwischenbodens 47 über eine Unterseite des Zwischenbodens 47 über. Der Zwischenboden 47 ist innen am Gehäuse 33 unterhalb des Trendabschnitts 45 vorhanden und grenzt an die Innenbohrungsabschnitte 22a und 29a. Zentral um die Bohrung 47a ist unterseitig am Zwischenboden 47 ein nach unten offener Hülsenabschnitt 47b ausgebildet, der radial über eine Öffnung zum Innenbohrungsabschnitt 22a offen ist. Ein unterseitig umlaufend geschlossener freier Rand des Hülsenabschnitts 47b bildet einen Ventilsitz 51 bzw. eine feste obere Begrenzung für einen unterhalb vorhandenen ersten Ventilkörper 48, der entlang der Längsachse L linear verschieblich ist. Der Ventilkörper 48 wird im dargestellten Ausgangszustand des Druckreglers 32 von einer als Schraubenfeder 50 ausgebildeten Druckfeder gegen den freien unteren Rand des Hülsenabschnitts 47b gedrückt. Von oben steht dabei eine freie Stirnseite des Stößelelements 46 an dem Ventilkörper 48 an und verschließt eine Seite einer zentrisch zur Längsachse L vorhandenen Auslassbohrung 49 in dem Ventilkörper 48. Die andere Seite der Auslassbohrung 49 ist zur Umgebung R offen.

Im Ausgangszustand des Druckreglers 32 verschließt damit der Ventilkörper 48 mit dem Stößelelement 46 die Verbindung zwischen dem Innenbohrungsabschnitt 22a und dem Innenbohrungsabschnitt 29a und außerdem verschließt das Stößelelement 46 die Auslassbohrung 49 in dem Ventilkörper 48 und somit die Verbindung zwischen dem Innenbohrungsabschnitt 22a und der Umgebung R.

Der Druckregler 32 spricht insbesondere dann an, wenn bei einer Bewegung des Übersetzerkolbens 17 in Richtung S1 der Pneumatikraum 15 sich verkleinert und aufgrund des Druckanstiegs Gas aus dem Pneumatikraum 15 über die Rückhub-Leitung 22 in den Innenbohrungsabschnitt 22a verdrängt wird. Bei dem Druckregler 32 steigt auch der Druck im Zwischenraum 54 an, was über die Verbindungsbohrung 53 bedingt ist. Hier regelt der Druckregler 32 selbsttätig derart, dass vergleichsweise schnell und präzise die ausweichbare Membranplatte 43 mit dem Stößelelement 46 in Richtung S3 angehoben wird, unter geringfügiger elastischer Verformung der Stellmembran 44 und gegen die Federkraft der Schraubenfeder 42, die dabei geringfügig zusammengedrückt wird.

Dabei wird das innere Ende der Auslassbohrung 49 im Ventilkörper 48 frei bzw. geöffnet, so dass ein praxisrelevanter Druckanstieg über p2 im Zwischenraum 54 unterbunden ist bzw. ein kurzzeitiges Überschreiten des Drucks in dem Innenbohrungsabschnitt 22a und im Zwischenraum 54 über einen Druck p2 unmittelbar wieder auf den Druck p2 reduziert wird, indem Gas aus dem Innenbohrungsabschnitt 22a in die Umgebung überströmt, was als Schnell- bzw. Sekundär-Entlüftung bezeichnet ist. Ein auch nur kurzer Anstieg über ein Druck von p2 auf der Ausgangsseite bzw. in den mit der Rückhub-Leitung 22 verbundenem Pneumatikraum 15 ist sicher unterbunden.

Das Stößelelement 46 verschließt die Auslassbohrung 49 sofort wieder, wenn der Druck in dem Innenbohrungsabschnitt 22a und dem Zwischenraum 54 wieder den eingestellten Regeldruck p2 erreicht. Denn der Druckregler 32 bzw. die mit dem Handrad 38 eingestellte Vorspannung bzw. Federkraft der Schraubenfeder 42 ist so abgestimmt, dass bei einem Gegendruck p2 im Zwischenraum 54 die Stellmembran 44 sich in der neutralen Ausgangsstellung gemäß Fig. 2 befindet, also das Stößelelement 46 die Auslassbohrung 49 verschließt. Dieser Vorgang kann sich abhängig vom Druck im Innenbohrungsabschnitt 22a bzw. von der Bewegung des Übersetzerkolbens 17 in Richtung S1 z. B. mehrmals in kurzen Zeitabständen wiederholen.

Bei einer umgekehrten Situation, wenn der Übersetzerkolben 17 sich in Richtung S2 bewegt und sich das Volumen des Pneumatikraums 15 vergrößert, sinkt der Druck im Innenbohrungsabschnitt 22a unter p2. Dann wird aufgrund der zum Ausgangszustand gemäß Fig. 2 reduzierten Druck-Gegenkraft auf die Stellmembran 44 auf der Seite des Zwischenraums 54, die Stellmembran 44 mit der Membranplatte 43 und dem Stößelelement 46 etwas nach unten in Richtung S4 bewegt. Dabei drückt das Stößelelement 46 gegen die Druckkraft der Schraubenfeder 50 den Ventilkörper 48 etwas in Richtung S4 nach unten. Die Verbindung zwischen den Innenbohrungsabschnitten 29a und 22a ist offen. Die Auslassbohrung 49 bleibt dabei verschlossen. Nun kann aufgrund der unterschiedlichen Druckniveaus Gas von dem Innenbohrungsabschnitt 29a, mit einem Druck p1 größer p2, zum Innenbohrungsabschnitt 22a, mit einem Druck kleiner p2, überströmen, bis in dem Innenbohrungsabschnitt 22a der Druck wieder dem Druck p2 entspricht. Wenn der Druck in dem Innenbohrungsabschnitt 22a den Wert p2 erreicht wird die Stellmembran 44 mit der Membranplatte 43 und dem Stößelelement 46 wieder etwas nach oben in Richtung S3 gedrückt, aufgrund des höheren Drucks p2 im Zwischenraum 54 und die Ausgangsstellung gemäß Fig. 2 ist wieder erreicht. Die Verbindung zwischen den Innenbohrungsabschnitten 29a und 22a ist wieder geschlossen, in dem Innenbohrungsabschnitt 22a herrscht exakt der gewünschte Druck p2. Dieser Vorgang kann sich abhängig von der Bewegung des Übersetzerkolbens 17 in Richtung S2 z. B. mehrmals in kurzen Zeitabständen wiederholen.

Bei dem Druckregler 32 übernimmt der Steuerschieber 46 vorteilhaft auch die Funktion des zweiten Ventilkörpers.

Fig. 3 zeigt schematisiert im Schnitt einen zum Präzisions-Druckregler 32 gemäß Fig. 1 alternativen Präzisions-Druckregler 55 in einem Ausgangszustand, in dem alle möglichen internen Leitungs-Verbindungen gesperrt bzw. verschlossen sind. Die Druckregler 32 und 55 sind im Grundaufbau vorzugsweise symmetrisch zur Längsachse L aufgebaut.

Der Druckregler 55 weist eine zur Grundfunktion des Druckreglers 32 entsprechende Grundfunktion auf, so dass zu den sich entsprechenden Elementen bzw. Funktionen des Druckreglers 55 auf die Beschreibung zum Druckregler 32 verwiesen wird. Der Druckregler 55 weist gegenüber dem Druckregler 32 ein noch besseres bzw. präziseres Ansprechverhalten im Hinblick auf eine Schnellentlüftung auf.

Der Druckregler 55 mit einer Längsachse L umfasst ein Gehäuse 56 mit einem eingangsseitigen Anschluss 57, einem ausgangsseitigen Anschluss 58 und einem Anschluss 59 zur Umgebung R und ein um die Längsachse L drehbares Handrad 60 mit einer Spindel 61, die durch Drehung des Handrads 60 nach oben in Richtung S3 und nach unten in Richtung S4 verschieblich ist und auf eine Stellhülse 62 wirkt. Die Anschlüsse 57-59 weisen jeweils eine Anschlussöffnung auf, die jeweils in einen internen Leitungsbereich des Druckreglers 55 münden.

Außerdem ist am Gehäuse 56 eine Stellmembran 63 randseitig fixiert, die im zentralen Bereich zwischen Platten einer Membranplatte 64 mit Stößelelement 65 aufgenommen ist. Das Stößelelement 65 steht an einem linear versetzbaren unteren bzw. ersten Ventilkörper 66 an, der mit einer Druck-Schraubenfeder 66a in Richtung S3 vorgespannt ist. Abhängig von der linearen Stellung des Ventilkörpers 66 ist eine Überströmöffnung 67 in einem Leitungsbereich zwischen dem Anschluss 57 und dem Anschluss 58 verschlossen, was die Ausgangsstellung gemäß Fig. 3 zeigt, oder geöffnet, wenn das Stößelelement 65 bezogen auf die Ausgangsstellung in Richtung S4 nach unten versetzt ist.

Außen am Stößelelement 65 ist ein weiterer bzw. zweiter Ventilkörper 68 verschieblich entlang der Längsachse L aufgenommen. Der Ventilkörper 68 steht in der Ausgangsstellung an einem Anschlag 65a an, der außen fest am Stößelelement 65 vorhanden ist. In der Ausgangsstellung verschließt der Ventilkörper 68 eine Entlüftungsöffnung 70, die in einem Leitungsbereich zwischen dem Anschluss 57 und dem Anschluss 59 vorhanden ist, wobei eine Druck-Schraubenfeder 69 den Ventilkörper 68 in die Verschlussrichtung bzw. in Richtung S4 vorspannt. Ausgehend von der Ausgangsstellung gemäß Fig. 3 wird bei einer Bewegung des Stößelelements 65 in Richtung S3 nach oben der Ventilkörper 68 von der Entlüftungsöffnung 70 abgehoben und diese geöffnet. Dabei nimmt der Anschlag 65a den Ventilkörper 68 nach oben mit. Das Stößelelement 65 hebt dabei vom unteren Ventilkörper 66 ab, wobei die Überströmöffnung 67 verschlossen bleibt.

Wenn umgekehrt das Stößelelement 65 bezogen auf die Ausgangsstellung in Richtung S4 nach unten versetzt wird, bleibt der Ventilkörper 68 positionsfest und hält die Entlüftungsöffnung 70 geschlossen. Die Überströmöffnung 67 wird geöffnet, indem das Stößelelement 65 den Ventilkörper 66 in Richtung S4 drückt, gegen die Federkraft der Schraubenfeder 66a.

Zwischen der Stellhülse 62 und einer weiteren bzw. oberen Membranplatte 72 mit einer daran eingeklemmten flexiblen Hilfsmembran 71 ist eine Druck-Schraubenfeder 73 eingespannt.

An der Membranplatte 72 steht unterseitig ein Kontaktelement 74 vor, das mit einer Ventilkugel 75 zusammenwirkt, wenn eine Relativbewegung zwischen dem Kontaktelement 74 und der Ventilkugel 75 stattfindet. Zwischen dem zentral angeordneten Kontaktelement 74 und der Innenseite des Gehäuses 56 ist eine flexible Haut 76 vorhanden, welch einen unterhalb der Membranplatte 72 liegenden Ventilraum 77 von einem unterhalb der Haut 76 liegenden Ventilraum 78 gasdicht trennt.

Aufgrund der Druckfedervorspannung auf die Membran 71 liegt die Ventilkugel 75 im Ausgangszustand durch das Kontaktelement 74 auf einer Verbindungsbohrung 79 und verschließt diese. Die Verbindungsbohrung 79 verbindet einen Ventilraum 80 oberhalb der Membranplatte 64 mit dem Ventilraum 78. Der Ventilraum 78 steht über eine Bohrung 81 in Verbindung mit der Umgebung R.

Des Weiteren existiert eine in Fig. 3 aufgrund der Schnittansicht unterbrochen dargestellte Verbindungsleitung 82, die eine Verbindung bereitstellt zwischen dem Ventilraum 80 und einem Leitungsbereich, der zum Anschluss 57 offen ist. Die Verbindungsleitung 82 mündet über einen Verengungsbereich 83 in den Ventilraum 80.

Die Ventilkugel 75 wird bei einem sich erhöhenden Druck im Ventilraum 80 etwas nach oben in Richtung S3 gedrückt, so dass die Verbindungsbohrung 79 öffnet und der sich erhöhende Druck wieder abbaut und die Ventilkugel 75 wieder absinkt und die Verbindungsbohrung 79 verschließt. Die Ventilkugel 75 kann in Richtung S3 bis zum Anschlag an dem Kontaktelement 74 abheben, gegebenenfalls mit einer vorgebbaren Kraft in die Verbindungsbohrung 79 gedrückt werden, indem die Membranplatte 72 über das Handrad 60 nach unten versetzt wird.

Außerdem ist eine Verbindungsleitung 84 vorhanden zwischen einem Leitungsbereich, der zum Anschluss 58 offen ist, und einem Ventilraum 85, der sich unterhalb der Membranplatte 64 mit der Membran 63 bzw. gegenüber dem Ventilraum 80 befindet. Von der Verbindungsleitung 84 zweigt eine Verbindungsleitung 86 ab, die in den Ventilraum 77 mündet.

Vorteilhafterweise entspricht der pneumatische Überströmquerschnitt bei geöffneter Überströmöffnung 67 dem Überströmquerschnitt bei geöffneter Entlüftungsöffnung 70. Denn beide Überströmquerschnitte ergeben sich als freier Ringquerschnitt zwischen dem einheitlichen Außendurchmesser d1 des Stößelelements 65 und dem Außen-Durchmesser d2 der Überströmquerschnitte. Dabei ist der Durchmesser der Überströmöffnung 67 und der Durchmesser der Entlüftungsöffnung 70 identisch oder zumindest nahezu gleich mit dem Durchmesser d2.

**Bezugszeichenliste:**

| | | | |
|---|---|---|---|
| | | 31 | Druckregelventil |
| 1 | Druckübersetzer | 32 | Präzisions-Druckregler |
| 1a | Kolben-Zylinder-Einheit | 33 | Gehäuse |
| 2 | Gehäuse | 34 | Schraubgewinde-Anschluss |
| 3 | Arbeitskolben | 35 | Schraubgewinde-Anschluss |
| 4 | Kolbenstange | 36 | Anschluss |
| 5 | Teilkolben | 36a | Innenbohrungsabschnitt |
| 5a | Kolbenabschnitt | 37 | Einstellmittel |
| 5b | Kolbenabschnitt | 38 | Handrad |
| 6 | Pneumatikraum | 39 | Spindel |
| 7 | Pneumatikraum | 40 | Innengewindebohrung |
| 8 | Arbeitsraum | 41 | Stellhülse |
| 9 | Speicherraum | 42 | Schraubenfeder |
| 10 | Speicherkolben | 43 | Membranplatte |
| 11 | Mantelrohr | 43a | Platte |
| 12 | Steuerraum | 43b | Platte |
| 13 | Gehäuseteil | 44 | Stellmembran |
| 13a | Ringspalt-Bereich | 45 | Trennabschnitt |
| 14 | Trennwand | 46 | Stößelelement |
| 15 | Pneumatikraum | 47 | Zwischenboden |
| 16 | Deckel | 47a | Bohrung |
| 17 | Übersetzerkolben | 47b | Hülsenabschnitt |
| 18 | Tauchkolben | 48 | Ventilkörper |
| 19 | Antriebsraum | 49 | Auslassbohrung |
| 20 | Vorhub-Leitung | 50 | Schraubenfeder |
| 21 | Ventil-Einheit | 51 | Ventilsitz |
| 22 | Rückhub-Leitung | 52 | Durchlassbohrung |
| 22a | Innenbohrungsabschnitt | 53 | Verbindungsbohrung |
| 23 | Verbindungsbohrung | 54 | Zwischenraum |
| 24 | Vorhub-Leitung | 55 | Präzisions-Druckregler |
| 25 | Rückhub-Leitung | 56 | Gehäuse |
| 26 | Leitung | 57 | Anschluss |
| 27 | Leitung | 58 | Anschluss |
| 28 | Leitung | 59 | Anschluss |
| 29 | Versorgungsleitung | 60 | Handrad |
| 29a | Innenbohrungsabschnitt | 61 | Spindel |
| 30 | Druckregeleinheit | 62 | Stellhülse |
| 63 | Stellmembran | 75 | Ventilkugel |
| 64 | Membranplatte | 76 | Haut |
| 65 | Stößelelement | 77 | Ventilraum |
| 65a | Anschlag | 78 | Ventilraum |
| 66 | Ventilkörper | 79 | Verbindungsbohrung |
| 66a | Druck-Schraubenfeder | 80 | Ventilraum |
| 67 | Überströmöffnung | 81 | Bohrung |
| 68 | Ventilkörper | 82 | Verbindungsleitung |
| 69 | Druck-Schraubenfeder | 83 | Verengungsbereich |
| 70 | Entlüftungsöffnung | 84 | Verbindungsleitung |
| 71 | Hilfsmembran | 85 | Ventilraum |
| 72 | Membranplatte | 86 | Verbindungsleitung |
| 73 | Druck-Schraubenfeder | 87 | Schalldämpfereinheit |
| 74 | Kontaktelement | | |

## Patentansprüche

1. Hydropneumatische Vorrichtung (1) zur Druckübersetzung mit einem verschieblichen Arbeitskolben (3) und einem verschieblichen Übersetzerkolben (17) zur Druckübersetzung auf den Arbeitskolben (3), wobei ein Arbeitshub des Arbeitskolbens (3) in eine Arbeitsrichtung einen ersten Hub und einen anschließenden zweiten Hub umfasst, wobei eine Pneumatikeinheit der Vorrichtung (1) vorgesehen ist, so dass der erste Hub über eine pneumatische Beaufschlagung des Arbeitskolbens (3) und der zweite Hub über eine pneumatische Beaufschlagung des Übersetzerkolbens (17) kontrollierbar ist, und wobei Hydraulikflüssigkeit vom Übersetzerkolben (17) verdrängt wird und die verdrängte Hydraulikflüssigkeit den zweiten Hub des Arbeitskolbens (3) bewirkt, wobei ein Abschnitt des Übersetzerkolbens (17) in einem Pneumatikraum der Vorrichtung (1) in eine Vorwärtsrichtung und in eine Rückstellrichtung verschieblich ist und ein Abschnitt des Übersetzerkolbens (17) den Pneumatikraum in einen ersten Hubraum (19) und einen zweiten Hubraum (15) unterteilt, wobei zur Rückstellung des Übersetzerkolbens (17) ein mit dem zweiten Hubraum (15) verbundenes pneumatisches Ventil (31, 32, 55) der Pneumatikeinheit vorgesehen ist, wobei das pneumatische Ventil (31, 32, 55) einen mit einem ersten Ventilkörper (48, 66) selbsttätig verschließbaren Überströmquerschnitt zwischen einer Eingangsseite des pneumatischen Ventils (31, 32, 55) und einer Ausgangsseite des pneumatischen Ventils (31, 32, 55) derart aufweist, dass der erste Ventilkörper (48, 66) den Überströmquerschnitt öffnet, wenn auf der Ausgangsseite der Gasdruck unter einen vorgebbaren Ausgangsdruck fällt, so dass über den Überströmquerschnitt ein Überströmen eines auf der Eingangsseite anstehenden Gasvolumens zur Ausgangsseite erfolgt und bei Erreichen des Ausgangsdrucks auf der Ausgangsseite der erste Ventilkörper (48, 66) den Überströmquerschnitt wieder verschließt, und wobei das pneumatische Ventil (31, 32, 55) einen mit einem zweiten Ventilkörper (46, 68) selbsttätig verschließbaren Entlüftungsquerschnitt zwischen der Ausgangsseite des pneumatischen Ventils (31, 32, 55) und einer Entlüftungsseite derart aufweist, dass der zweite Ventilkörper (46,68) den Entlüftungsquerschnitt öffnet, wenn auf der Ausgangsseite der Gasdruck über den vorgebbaren Ausgangsdruck steigt, so dass über den geöffneten Entlüftungsquerschnitt ein Entlüften eines Gasvolumens von der Ausgangsseite zur Entlüftungsseite erfolgt und bei Erreichen des Ausgangsdrucks auf der Ausgangsseite der zweite Ventilkörper (46, 68) den Entlüftungsquerschnitt wieder verschließt, **dadurch gekennzeichnet, dass** das pneumatische Ventil (31, 32, 55) derart ausgebildet ist, dass die Fläche des Entlüftungsquerschnitts mindestens 30 Prozent der Fläche des Überströmquerschnitts beträgt, vorzugsweise mindestens 50 Prozent der Fläche des Überströmquerschnitts beträgt.

2. Hydropneumatische Vorrichtung nach Anspruch 1, **dadurch gekennzeichnet, dass** das pneumatische Ventil (31, 32, 55) derart ausgebildet ist, dass die Fläche des Entlüftungsquerschnitts zumindest nahezu der Fläche des Überströmquerschnitts entspricht.

3. Hydropneumatische Vorrichtung nach Anspruch 1 oder Anspruch 2, dass der Überströmquerschnitt und der Entlüftungsquerschnitt konzentrisch angeordnet sind.

4. Hydropneumatische Vorrichtung nach einem der vorhergehenden Ansprüche, **dadurch gekennzeichnet, dass** der Überströmquerschnitt als Ringfläche ausgebildet ist.

5. Hydropneumatische Vorrichtung nach einem der vorhergehenden Ansprüche, **dadurch gekennzeichnet, dass** der Entlüftungsquerschnitt als Ringfläche ausgebildet ist.

6. Hydropneumatische Vorrichtung nach einem der vorhergehenden Ansprüche, **dadurch gekennzeichnet, dass** ein bewegbares Steuerelement (65) des pneumatischen Ventils (55), insbesondere ein Steuerschieber, durch den zweiten Ventilkörper (68) greift und auf den ersten Ventilkörper (66) wirkt.

7. Hydropneumatische Vorrichtung nach einem der vorhergehenden Ansprüche, **dadurch gekennzeichnet, dass** das pneumatische Ventil eine Membrananordnung mit einer federnd ausweichbaren Membran (44, 71) umfasst, mit welcher eine Bewegung des ersten Ventilkörpers (48, 66) beeinflussbar ist.

8. Hydropneumatische Vorrichtung nach einem der vorhergehenden Ansprüche, **dadurch gekennzeichnet, dass** das pneumatische Ventil eine Membrananordnung mit einer federnd ausweichbaren Membran (44, 63) umfasst, mit welcher eine Bewegung des zweiten Ventilkörpers (46, 68) beeinflussbar ist.

9. Hydropneumatische Vorrichtung nach einem der vorhergehenden Ansprüche, **dadurch gekennzeichnet, dass** das pneumatische Ventil (31, 32, 55) eine Membrananordnung mit einem an einer Membran (63, 71) angebrachten Steuerelement (46, 74, 65), insbesondere Steuerschieber, aufweist.

10. Hydropneumatische Vorrichtung nach einem der vorhergehenden Ansprüche, **dadurch gekennzeichnet, dass** die Pneumatikeinheit eine Schalldämpfereinheit (87) aufweist.

11. Vorrichtung zum Clinchen oder zum Nieten mit einem antreibbaren Arbeitskolben (3) zum Erstellen einer Clinchanordnung oder einer Nietanordnung mit einem Nietelement, wobei die Vorrichtung eine hydropneumatische Vorrichtung (1) nach einem der vorhergehenden Ansprüche umfasst.

12. Vorrichtung zum Pressen, Einpressen, Prägen, Verdichten, Einstanzen, Verstemmen, Durchsetzfügen, Stanzen, Umformen und/oder Lochen mit einem antreibbaren Arbeitskolben (3), wobei die Vorrichtung eine hydropneumatische Vorrichtung (1) nach einem der Ansprüche 1 bis 10 umfasst.

## Claims

1. Hydropneumatic device (1) for pressure transmission with a displaceable working piston (3) and a displaceable intensifier piston (17) for transmitting pressure to the working piston (3), wherein a working stroke of the working piston (3) in a working direction comprises a first stroke and a subsequent second stroke, wherein a pneumatic unit of the device (1) is provided so that the first stroke can be controlled by pneumatic pressure of the working piston (3) and the second stroke can be controlled by pneumatic pressure of the intensifier piston (17), and wherein hydraulic fluid is displaced by the intensifier piston (17) and the displaced hydraulic fluid triggers the second stroke of the working piston (3), wherein a section of the intensifier piston (17) is displaceable in a pneumatic chamber of the device (1) in forwards direction and in backwards direction and a section of the intensifier piston (17) divides the pneumatic chamber into a first stroke chamber (19) and a second stroke chamber (15), wherein for resetting the intensifier piston (17) a pneumatic valve (31, 32, 55) of the pneumatic unit connected to the second stroke chamber (15) is provided, wherein the pneumatic valve (31, 32, 55) has an overflow cross-section which can be closed automatically by a first valve body (48, 66) between an input side of the pneumatic valve (31, 32, 55) and an output side of the pneumatic valve (31, 32, 55) such that the first valve body (48, 66) opens the overflow cross-section, when on the output side the gas pressure falls below a predefinable output pressure, so that over the overflow cross-section there is an overflow of gas volume at the input side towards the output side and when the output pressure is reached on the output side the first valve body (48, 66) closes the overflow cross-section again, and wherein the pneumatic valve (31, 32, 55) has a venting cross-section which can be closed automatically by a second valve body (46, 68) between the output side of the pneumatic valve (31, 32, 55) and a venting side such that the second valve body (46, 68) opens the venting cross-section, when on the output side the gas pressure rises above the predefinable initial pressure so that over the opened venting cross-section a gas volume is vented from the output side to the venting side, and when the initial pressure is reached on the output side the second valve body (46, 68) closes the venting cross-section again, **characterised in that** the pneumatic valve (31, 32, 55) is designed such that the area of the venting cross-section is at least 30 percent of the area of the overflow cross-section, preferably at least 50 percent of the area of the overflow cross-section.

2. Hydropneumatic device according to claim 1, **characterised in that** the pneumatic valve (31, 32, 55) is designed such that the area of the venting cross-section corresponds at least almost to the area of the overflow cross-section.

3. Hydropneumatic device according to claim 1 or claim 2, **characterised in that** the overflow cross-section and the venting cross-section are arranged to be concentric.

4. Hydropneumatic device according to any of the preceding claims, **characterised in that** the overflow cross-section is designed as an annular area.

5. Hydropneumatic device according to any of the preceding claims, **characterised in that** the venting cross-section is designed as an annular area.

6. Hydropneumatic device according to any of the preceding claims, **characterised in that** a movable control element (65) of the pneumatic valve (55), in particular a control slide, engages through the second valve body (68) and acts on the first valve body (66).

7. Hydropneumatic device according to any of the preceding claims, **characterised in that** the pneumatic valve comprises a membrane arrangement with a resiliently deflectable membrane (44, 71), by means of which a movement of the first valve body (48, 66) can be influenced.

8. Hydropneumatic device according to any of the preceding claims, **characterised in that** the pneumatic valve comprises a membrane arrangement with a resiliently deflectable membrane (44, 63), by means of which a movement of the second valve body (46, 68) can be influenced.

9. Hydropneumatic device according to any of the preceding claims, **characterised in that** the pneumatic valve (31, 32, 55) has a membrane arrangement with a control element (46, 74, 65) attached to a membrane (63, 71), in particular a control slide.

10. Hydropneumatic device according to any of the preceding claims, **characterised in that** the pneumatic unit has a sound absorber unit (87).

11. Device for clinching or riveting comprising a drivable working piston (3) for creating a clinching arrangement or a riveting arrangement with a rivet element, wherein the device comprises a hydropneumatic device (1) according to any of the preceding claims.

12. Device for pressing, pressing-in, embossing, compacting, stamping-in, caulking, clinching, stamping, forming and/or punching with a drivable working piston (3), wherein the device comprises a hydropneumatic device (1) according to any of claims 1 to 10.

## Revendications

1. Dispositif hydropneumatique (1) pour une démultiplication de pression avec un piston de travail (3) déplaçable et un piston démultiplicateur (17) déplaçable pour démultiplier la pression appliquée au piston de travail (3), dans lequel une course de travail du piston de travail (3) dans une direction de travail comprend une première course et une deuxième course subséquente, une unité pneumatique du dispositif (1) étant prévue de sorte que la première course peut être contrôlée par une alimentation pneumatique du piston de travail (3) et la deuxième course peut être contrôlée par une alimentation pneumatique du piston démultiplicateur (17), et le fluide hydraulique est déplacée par le piston démultiplicateur (17) et l'huile hydraulique déplacée provoque la deuxième course du piston de travail (3), une section du piston démultiplicateur (17) pouvant être déplacée dans un espace pneumatique du dispositif (1) dans une direction d'avancement et dans une direction de rétractation, et une section du piston démultiplicateur (17) divisant l'espace pneumatique en un premier espace de déplacement (19) et un second espace de déplacement (15), une soupape pneumatique (31, 32, 55) de l'unité pneumatique reliée au second espace de déplacement (15) étant prévue pour rétracter le piston démultiplicateur (17), la soupape pneumatique (31, 32, 55) étant munie, entre un côté entrée de la soupape pneumatique (31, 32, 55) et un côté sortie de la soupape pneumatique (31, 32, 55), d'une section transversale de débordement pouvant être fermée automatiquement par un premier corps de soupape (48, 66) de sorte que le premier corps de soupape (48, 66) ouvre la section transversale de débordement lorsque la pression du gaz du côté sortie tombe au-dessous d'une pression de sortie prédéterminable, de sorte qu'un volume de gaz présent du côté entrée s'écoule vers le côté sortie via la section transversale de débordement, et lorsque la pression de sortie du côté sortie est atteinte, le premier corps de soupape (48, 66) referme la section transversale de débordement, la soupape pneumatique (31, 32, 55) étant munie, entre le côté sortie de la soupape pneumatique (31, 32, 55) et un côté d'évent, d'une section transversale d'évent pouvant être fermée automatiquement par un deuxième corps de soupape (46, 68) de telle sorte que le deuxième corps de soupape (46, 68) ouvre la section transversale d'évent lorsque la pression du gaz côté sortie dépasse la pression de sortie prédéfinissable de sorte qu'un volume de gaz présent côté sortie s'échappe vers le côté d'évent via la section transversale d'évent ouverte et, lorsque la pression de sortie du côté sortie est atteinte, le deuxième corps de soupape (46, 68) referme la section transversale d'évent, **caractérisé en ce que** la soupape pneumatique (31, 32, 55) est conçue de telle sorte que la surface de la section transversale d'évent représente au moins 30 % de la surface de la section transversale de débordement, de préférence au moins 50 % de la surface de la section transversale de débordement.

2. Dispositif hydropneumatique selon la revendication 1, **caractérisé en ce que** la soupape pneumatique (31, 32, 55) est conçue de telle sorte que la surface de la section transversale d'évent correspond au moins sensiblement à la surface de la section transversale de débordement.

3. Dispositif hydropneumatique selon la revendication 1 ou la revendication 2, ***caractérisé en ce que*** la section transversale de débordement et la section transversale d'évent sont disposées de façon concentrique.

4. Dispositif hydropneumatique selon l'une des revendications précédentes, **caractérisé en ce que** la section transversale de débordement est conçue sous la forme d'une surface annulaire.

5. Dispositif hydropneumatique selon l'une des revendications précédentes, **caractérisé en ce que** la section transversale d'évent est conçue sous la forme d'une surface annulaire.

6. Dispositif hydropneumatique selon l'une des revendications précédentes, **caractérisé en ce qu'un** élément de contrôle (65) mobile de la soupape pneumatique (55), en particulier une soupape à tiroir, s'engage à travers le second corps de soupape (68) et agit sur le premier corps de soupape (66).

7. Dispositif hydropneumatique selon l'une des revendications précédentes, **caractérisé en ce que** la soupape pneumatique comprend un agencement de membrane avec une membrane élastiquement déformable (44, 71) avec laquelle il est possible d'influencer un mouvement du premier corps de soupape (48, 66).

8. Dispositif hydropneumatique selon l'une des revendications précédentes, **caractérisé en ce que** la soupape pneumatique comprend un agencement de membrane avec une membrane élastiquement déformable (44, 63) avec laquelle il est possible d'influencer un mouvement du deuxième corps de soupape (46, 68).

9. Dispositif hydropneumatique selon l'une des revendications précédentes, **caractérisé en ce que** la soupape pneumatique (31, 32, 55) est munie d'un agencement de membrane avec un élément de contrôle (46, 74, 65) fixé à une membrane (63, 71), en particulier une soupape à tiroir.

10. Dispositif hydropneumatique selon l'une des revendications précédentes, **caractérisé en ce que** l'unité pneumatique est munie d'une unité de silencieux (87).

11. Dispositif de clinchage ou de rivetage avec un piston de travail (3) pouvant être entraîné pour fabriquer un agencement de clinchage ou un agencement de rivetage avec un élément de rivetage, le dispositif comprenant un dispositif hydropneumatique (1) selon l'une des revendications précédentes.

12. Dispositif de pressage, de fixation par pressage, d'emboutissage, de compactage, d'estampage, de calfatage, de clinchage, de poinçonnage, de formage et/ou de perçage avec un piston de travail (3) pouvant être entraîné, le dispositif comprenant un dispositif hydropneumatique (1) selon une des revendications 1 à 10.
